# EUROPEAN PATENT SPECIFICATION

(11) **EP 2 278 694 B1**
(45) Date of publication and mention of the grant of the patent: **28.06.2017**
(21) Application number: 09746378.0
(22) Date of filing: 14.05.2009
(51) Int. Cl.: H02M 1/12, H05K 1/02, H02M 7/00

(54) **FILTER CIRCUIT MOUNTING UNIT AND POWER SOURCE UNIT**
MONTAGEEINHEIT FÜR SIEBSCHALTUNG UND STROMVERSORGUNGSEINHEIT
UNITÉ DE MONTAGE DE CIRCUIT DE FILTRE ET UNITÉ DE SOURCE D'ALIMENTATION

(30) Priority: 14.05.2008 JP 2008127498
(43) Date of publication of application: 26.01.2011
(73) Proprietor: Daikin Industries, Ltd., Osaka-shi, Osaka 530-8323 (JP)
(72) Inventor: ISHIZEKI, Shinichi, Sakai-shi Osaka 591-8511 (JP); SATOU, Toshiaki, Kusatsu-shi Shiga 525-8526 (JP)
(74) Representative: Hoffmann Eitle
(86) International application number: PCT/JP2009/002112
(87) International publication number: WO 2009/139171

(56) References cited:
- CN-A- 1 976 220
- CN-Y- 201 323 109
- JP-A- 5 161 268
- JP-A- 6 233 521
- JP-A- 7 022 886
- JP-A- 7 190 466
- JP-A- 10 107 571
- JP-A- 2005 073 439
- JP-A- 2005 304 153
- JP-U- 5 087 932
- US-A- 6 144 269

## Description

### TECHNICAL FIELD

The present invention relates to filter circuit mounting units having filter circuits for reducing switching noise mounted on boards thereof, and to power supply units equipped with the filter circuit mounting units.

### BACKGROUND ART

Conventionally, there has been known a filter circuit that is connected to a power supply line to reduce noise accompanied with switching.

This type of filter circuit is disclosed in Patent Document 1. The filter circuit is connected to a power supply line between an AC (alternating current) power supply and a switching power supply (switching circuit). The filter circuit prevents noise accompanied with a switching operation of the switching circuit from propagating to an AC power supply side. In the filter circuit, common mode noise is reduced by connecting capacitors in parallel to each other, and then by ground points thereof being connected to a ground.

Further, Patent Document 2 discloses a filter circuit and mounting unit comprising a board with an input terminal and a ground terminal that is/are connected to a power supply line between the input terminal and a switching circuit. A ground path electrically connects the filter circuit and the ground terminal.

Patent Document 3 discloses a noise-cut LC filter for power converter with overlapping aligned coil patterns.

### CITATION LIST

### PATENT DOCUMENT

Patent Document 1: Japanese Laid-Open Patent Publication No. 06-233521
Patent Document 2: Japanese Laid-Open Patent Publication No. 10-107571
Patent Document 3: US 6 144 269 A

### SUMMARY OF THE INVENTION

### TECHNICAL PROBLEM

A filter circuit mounting unit having the filter circuit mounted on a board thereof usually uses a ground path connecting a connection between the capacitors of the filter circuit to the ground which is formed by patterning it on the printed circuit board. That is, on the printed circuit board, the filter circuit is patterned on the power supply line connected to input terminals of a power supply, and the connection between the capacitors and a ground terminal are further connected with each other with a predetermined wiring pattern.

However, the input terminals and ground terminal are provided relatively near each other due to a constraint of electric wiring on the printed circuit board, etc. For this reason, there has been a case where the above-mentioned power supply line and ground path extend parallel to each other to be adjacent to each other on the printed circuit board.

When the power supply line and the ground path are adjacent to each other in this way, noise allowed to escape from the filter circuit to the ground path propagates to the power supply line as radiation noise. As a result, there occurs a problem that a desired effect of the noise reduction cannot be obtained sufficiently in the filter circuit. In addition, in order to prevent propagation of the noise from the ground path to the power supply line, it can also be considered that the power supply line and the ground path are formed so as to be spaced apart from each other as much as possible. However, this case leads to increasing a size of the printed circuit board.

The present invention was made in view of the above problems, and it aims at avoiding propagation of noise from a filter circuit to a power supply line without leading to increase of a size of a printed circuit board in a filter circuit mounting unit on which the filter circuit is mounted.

### SOLUTION TO THE PROBLEM

A first aspect of the present invention is directed to a filter circuit mounting unit for use in a power supply unit for a motor having the features of claim 1.

In the first aspect of the present invention, the filter circuit(s) (60, 70) is/are connected to the power supply line (55) between the input terminals (53) and the switching circuits (20, 40). The switching noise of the switching circuits (20, 40) is reduced in the filter circuit(s) (60, 70). That is, the filter circuit(s) (60, 70) allow(s) common mode noise due to a switching operation to escape to a ground terminal (54) side, and thereby prevent(s) propagation of the noise to the power supply line (55) etc. Here, in the first aspect of the present invention, the ground path(s) that electrically connect(s) the filter circuit(s) (60, 70) and the ground terminal (54) is/are composed of the cable wire(s) (78). That is, the ground path according to the first aspect of the present invention is not patterned on the board (51) unlike conventional examples, but it is composed of the cable wire (78) spaced apart from the board (51). For this reason, the ground path(s) (cable wire(s) (78)) of the filter circuit(s) (60, 70) and the power supply line (55) can be spaced apart from each other without increasing a size of the board (51). As a result, it can be avoided that radiation noise from the ground path(s) of the filter circuit(s) (60, 70) propagates to the power supply line (55).

A second aspect of the present invention is characterized in that in the first aspect of the present invention, a plurality of filter circuits (60, 70) are connected to the power supply line (55) in multiple stages, and that at least one ground path of the plurality of filter circuits (60, 70) is made of the cable wire (78).

In the second aspect of the present invention, the plurality of filter circuits (60, 70) are connected to the power supply line (55) in multiple stages. As a result, noise of the switching circuits (20, 40) is further reduced. Here, the cable wire(s) (78) is/are used for at least one of the plurality of filter circuits (60, 70). Hence, radiation noise can be avoided from propagating to the power supply line (55) in the ground path(s) of this/these filter circuit(s) (60, 70).

A third aspect of the present invention is characterized in that in the second aspect of the present invention, a ground path of the filter circuit (60, 70) that is connected to a switching circuits (20, 40) side among the plurality of filter circuits (60, 70) includes the cable wire (78), and a ground path of the filter circuit (60, 70) that is connected to an input terminals (53) side among the plurality of filter circuits (60, 70) includes a wiring pattern (68) on the board (51).

In the third aspect of the present invention, composed of the cable wire (78) is the ground path of one of the plurality of filter circuits (60, 70) that are provided in multiple stages, the one being connected to the switching circuits (20, 40) side. Here, the ground path of one of the filter circuits (60, 70), the one being connected to the switching circuits (20, 40) side, has a larger amount of noise compared with the ground path of the other of the filter circuits (60, 70), the other being connected to the input terminals (53) side. Consequently, in the third aspect of the present invention, the ground path with the larger amount of noise is formed of the cable wire (78) as described above, thereby reliably preventing propagation of the radiation noise from this ground path to the power supply line (55). Meanwhile, an amount of noise is relatively small in the ground path of one of the filter circuits (60, 70), the one being connected to the input terminals (53) side. For this reason, even if the ground path is composed of the wiring pattern (68) on the board (51), an effect of the radiation noise on the power supply line (55) is small.

A fourth aspect of the present invention is characterized in that in any one of the first to third aspects of the present invention, wherein a sheet metal on which the input terminal and the ground terminal are mounted is provided at the one end of the printed circuit board.

In the fourth aspect of the present invention, the cable wire(s) (78) used for the ground path(s) of the filter circuit(s) (60, 70) is/are connected to the ground terminal (54) on the sheet metal (51 a) that is formed at the end of the board (51). For this reason, the ground path(s) of the filter circuit(s) (60, 70) and the power supply line (55) can be spaced apart from each other, thus enabling to avoid propagation of the radiation noise from the ground path(s) of the filter circuit(s) (60, 70) to the power supply line (55).

A fifth aspect of the present invention is characterized in that in any one of the first to fourth aspects of the present invention, the switching circuit(s) is/are composed of either one of or both of an inverter circuit (40) that converts a DC (direct current) voltage into an AC (alternating current) voltage, and a rectifier circuit (20) for rectifying an AC voltage of an AC power supply (S) into a DC voltage.

In the fifth aspect of the present invention, either one of or both of the rectifier circuit (20) and the inverter circuit (40) is/are used as the switching circuit(s), and switching noise of these switching circuits (20, 40) is reduced by the filter circuit(s) (60, 70).

A sixth aspect of the present invention is directed to a power supply unit for a motor (M) of a compressor or a fan of a refrigeration system that performs a refrigeration cycle. This power supply unit is then characterized by being equipped with the filter circuit mounting unit (50) of any one of the first to fifth aspects of the present invention.

In the sixth aspect of the present invention, the power supply unit for the motor (M) of the compressor or the fan of the refrigeration system is equipped with the filter circuit mounting unit of any one of the above aspects of the present invention. For this reason, noise in the power supply line (55) is effectively reduced in the power supply unit.

### ADVANTAGES OF THE INVENTION

In the present invention, the ground path(s) of the filter circuit(s) (60, 70) is/are composed of the cable wire(s) (78) that is/are arranged spaced apart from the board (51). For this reason, the ground path and the power supply line (55) can be easily spaced apart from each other without increasing the size of the board (51). Hence, radiation noise can be prevented from propagating from the ground path to the power supply line (55), thus enabling to obtain a desired effect of the noise reduction in the filter circuit(s) (60, 70). As a result, a filter circuit mounting unit that can sufficiently eliminate the noise can be provided without providing other noise suppression parts or without increasing the size of the board (51). In particular, in the fourth aspect of the present invention, since the ground terminal (54) is provided on the sheet metal (51a), the ground terminal (54) of the sheet metal (51a) and the power supply line (55) can be relatively easily spaced apart from each other without increasing the size of the board (51), and as a result, the ground path and the power supply line (55) can be further spaced apart from each other. Hence, radiation noise can be prevented more effectively from propagating from the ground path to the power supply line (55).

In addition, in the second aspect of the present invention, switching noise can be reliably reduced by providing the filter circuits (60, 70) in multiple stages. In particular, in the third aspect of the present invention, the ground path of one of the filter circuits (60, 70), the one being connected to the switching circuits (20, 40) side, where an amount of noise tends to be relatively large, is composed of the cable wire (78). For this reason, radiation noise can be effectively prevented from propagating from the ground path to the power supply line (55). Meanwhile, the ground path of the other of the filter circuits (60, 70), the other being connected to the input terminals (53) side, where the amount of noise tends to be relatively small, is composed of the wiring pattern (68) on the board (51) without using the cable wire (78), thus enabling to achieve simplification of a system structure.

In addition, in the fifth aspect of the present invention, switching noise of the rectifier circuit (20) and the inverter circuit (40) can be effectively reduced by the filter circuits (60, 70).

In addition, in the sixth aspect of the present invention, the effect of the noise reduction can be sufficiently obtained in the power supply unit for the motor (M) of the compressor or the fan of the refrigeration system, thus enabling to ensure reliability for the power supply unit. In addition, space-saving and simplification of the power supply unit can be achieved.

### BRIEF DESCRIPTION OF THE DRAWINGS

[FIG. 1] FIG. 1 is a circuit diagram showing a schematic configuration of a power supply unit according to the present embodiment.
[FIG. 2] FIG. 2 is a schematic configuration diagram showing an arrangement example of a sheet metal member in the power supply unit according to the present embodiment.
[FIG. 3] FIG. 3 is a circuit diagram showing a schematic configuration of a power supply unit according to a first example of other embodiments.
[FIG. 4] FIG. 4 is a circuit diagram showing a schematic configuration of a power supply unit according to a second example of the other embodiments.
[FIG. 5] FIG. 5 is a circuit diagram showing a schematic configuration of a power supply unit according to a third example of the other embodiments.
[FIG. 6] FIG. 6 is a circuit diagram showing a schematic configuration of a power supply unit according to a fourth example of the other embodiments.
[FIG. 7] FIG. 7 is a circuit diagram showing a schematic configuration of a power supply unit according to a fifth example of the other embodiments.

### DESCRIPTION OF REFERENCE CHARACTERS

- 10: power supply unit
- 20: rectifier circuit (switching circuit)
- 40: inverter circuit (switching circuit)
- 50: filter circuit mounting unit
- 51: printed circuit board (board)
- 51a: sheet metal
- 53: input terminal
- 54: ground terminal
- 55: power supply line
- 60: first filter circuit
- 68: ground pattern (wiring pattern)
- 70: second filter circuit
- 78: ground wire (cable wire)
- S: AC (alternating current) power supply (power supply)
- M: motor

### DESCRIPTION OF EMBODIMENTS

Embodiments of the present invention will be described in detail hereinafter based on the drawings.

Equipped with a filter circuit mounting unit (50) according to the present invention is a power supply unit (10) for a motor (M) of a compressor of an air conditioner. The air conditioner is a refrigeration system in which refrigerant circulates through a refrigerant circuit to perform a refrigeration cycle, and the compressor is connected to this refrigerant circuit. In addition, the motor (M) is composed of a DC brushless motor. In addition, the power supply unit (10) is housed inside an outdoor unit of the air conditioner along with the compressor and an outdoor fan.

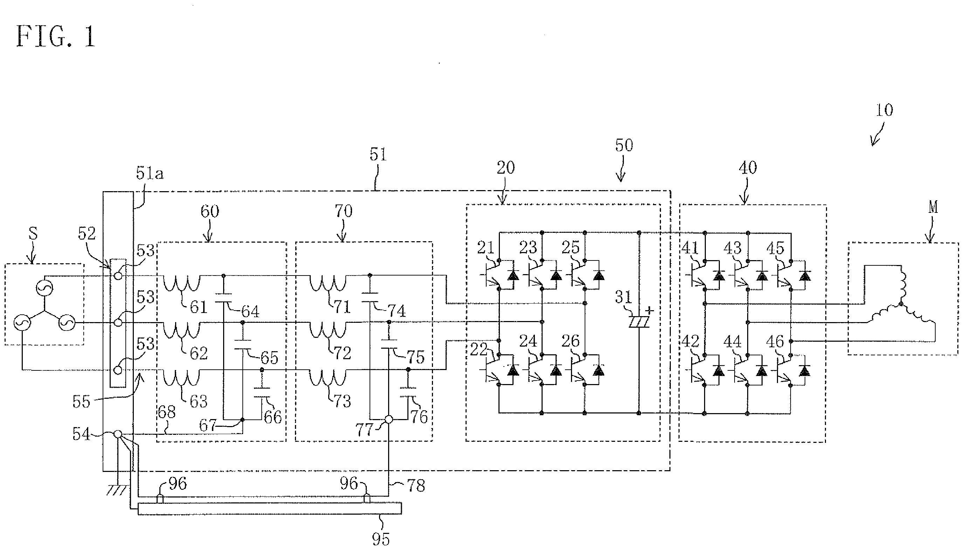

As shown in FIG. 1, the power supply unit (10) is provided with the filter circuit mounting unit (50) and an inverter circuit (40).

The filter circuit mounting unit (50) has a printed circuit board (51). A sheet metal (51 a) is formed at one end of the printed circuit board (51). A ground terminal (54) that is connected to a ground is provided on the sheet metal (51a). That is, the sheet metal (51a) is held at a ground potential. In addition, a terminal unit (52) is provided on the sheet metal (51a) so as to be adjacent to the ground terminal (54). Input terminals (53) are provided at the terminal unit (52). A commercial power supply (S), which is a three-phase AC power supply, is connected to the input terminals (53), into which an output power from the commercial power supply (S) is input. Further, two filter circuits (60, 70) and a rectifier circuit (20) are mounted on the printed circuit board (51).

The filter circuits (60, 70) are connected to a power supply line (55) between the input terminals (53) and the rectifier circuit (20) in multiple stages. That is, on the power supply line (55), a first filter circuit (60) is connected to an input terminals (53) side, and a second filter circuit (70) is to a rectifier circuit (20) side. The filter circuits (60, 70) are provided for reducing noise accompanied with switching of the rectifier circuit (20) and the inverter circuit (40). In addition, the power supply line (55) is formed by being patterned on the printed circuit board (51).

The rectifier circuit (20) includes a switching circuit in which six switching elements (21-26) composed of power semiconductor devices are three-phase bridge connected. In the rectifier circuit (20), DC voltage generation, power factor improvement, and harmonic suppression are performed by controlling switching (ON/OFF) of each switching element (21-26). In addition, connected to the rectifier circuit (20) is a capacitor (31) for charging and discharging outputs thereof.

The inverter circuit (40) is mounted on a different printed circuit board (not shown) from the printed circuit board (51). The inverter circuit (40) is provided for converting a DC voltage of the capacitor (31) into a three-phase AC voltage to then supply a converted DC voltage to the motor (M) used as a load. The inverter circuit (40) includes a switching circuit in which six switching elements (41-46) composed of power semiconductor devices are three-phase bridge connected. In the inverter circuit (40), a rotational speed and output torque of the motor (M) are adjusted by controlling switching (ON/OFF) of each switching element (41-46).

The aforementioned filter circuits (60, 70) are composed of common mode noise filters that reduce common mode noise. Specifically, the first filter circuit (60) has a common mode choke coil composed of three coils (61, 62, 63), and three Y capacitors (64, 65, 66). Similarly, the second filter circuit (70) has a common mode choke coil composed of three coils (71, 72, 73), and three Y capacitors (74, 75, 76).

In the first filter circuit (60), a connection (67) of the three Y capacitors (61, 62, 63) is connected to the ground terminal (54) through a ground pattern (68) on the printed circuit board (51). That is, in the first filter circuit (60), a ground path for allowing noise to escape to a ground side is composed of a wiring pattern on the printed circuit board (51).

In contrast with this, in the second filter circuit (70), a connection (77) of the three Y capacitors (71, 72, 73) is connected to the ground terminal (54) through a ground wire (78). That is, in the second filter circuit (70), a ground path for allowing noise escape to a ground side is composed of the ground wire (78) formed as a cable wire (so-called a harness). The ground wire (78) is arranged so as to be spaced apart from the printed circuit board (51). Specifically, the ground wire (78) is wired so as to extend along a side sheet of an electric component casing that is equipped with the printed circuit board (51), and an end of the ground wire (78) is joined to the ground terminal (54) on the sheet metal (51a). As a result, the ground wire (78) of the second filter circuit (70) and the power supply line (55) on the printed circuit board (51) are spaced apart from each other by not less than a predetermined space.

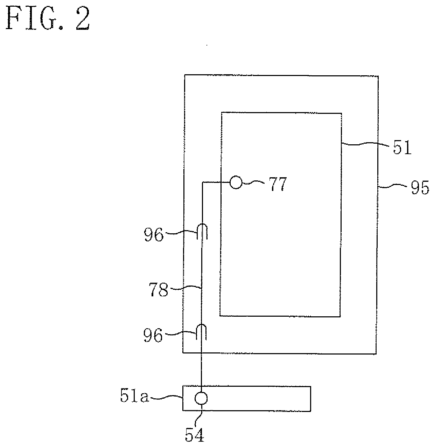

In addition, a sheet metal member (95) is provided near the printed circuit board (51) in the present embodiment. The sheet metal member (95) is arranged near an end of the printed circuit board (51) with a predetermined space therebetween. The harness of the ground wire (78) is then fixed to the sheet metal member (95) through predetermined clamping members (96, 96). That is, the sheet metal member (95) constitutes a holding member that holds the ground wire (78) with a predetermined space from the power supply line (55). In addition, the sheet metal member (95) is electrically connected to the ground terminal (54) to be at a ground potential. For this reason, even if the sheet metal member (95) is made to hold the ground wire (78), propagation of the noise etc. to the ground wire (78) is suppressed. It is to be noted that a positional relationship between the sheet metal member (95) and the printed circuit board (51) is not limited to an example shown in FIG. 1. In other words, although the sheet metal member (95) may be arranged near the end of the printed circuit board (51), for example, as shown in FIG. 2, it may be arranged under (at a front surface side, a back surface side, etc.) the printed circuit board (51) so as to be substantially parallel thereto.

As described above, the ground wire (78) is arranged so that the ground path of the second filter circuit (70) may be spaced apart from the power supply line (55) with a predetermined space therebetween. As a result, it is suppressed that radiation noise generated from the ground wire (78) of the second filter circuit (70) propagates to the power supply line (55) on the printed circuit board (51).

More specifically, since the second filter circuit (70) is connected to the side of the rectifier circuit (20) and the inverter circuit (40) used as the switching circuits, an amount of noise allowed to escape from the ground path (ground wire (78)) to the ground also becomes larger compared with the first filter circuit (60). For this reason, the radiation noise radiated from the ground path of the second filter circuit (70) becomes larger than that from the ground path (wiring pattern (68)) of the first filter circuit (60). Consequently, if the ground path of the second filter circuit (70) is formed on the printed circuit board (51), a distance between this ground path and the power supply line (55) becomes short, and thus a large amount of radiation noise propagates from the ground path to the power supply line (55).

However, in the present embodiment, since the ground path of the second filter circuit (70) is composed of the ground wire (78), and it is arranged spaced apart from the power source line (55) compared with the ground path of the first filter circuit (60), propagation of the radiation noise from the ground wire (78) to the power supply line (55) is suppressed to the minimum.

Meanwhile, the ground path of the first filter circuit (60) is formed on the printed circuit board (51) with the ground pattern (68). However, since the radiation noise is relatively small in the ground path of the first filter circuit (60), even if a distance between the ground pattern (68) and the power supply line (55) becomes short, the radiation noise only slightly propagates from the ground pattern (68) to the power supply line (55).

### - Advantages of the embodiment -

In the above embodiment, the ground path of the second filter circuit (70) is composed of the ground wire (78) that is arranged spaced apart from the printed circuit board (51). For this reason, the ground path of the second filter circuit (70) and the power supply line (55) can be easily spaced apart from each other without increasing a size of the printed circuit board (51). Hence, radiation noise can be prevented from propagating from the ground path of the second filter circuit (70) to the power supply line (55), thus enabling to obtain a desired effect of the noise reduction in the filter circuit mounting unit (50). As a result, noise can be sufficiently reduced, and reliability for the power supply unit (10) for the motor (M) of the compressor can be ensured without providing other noise suppression parts or without increasing the size of the printed circuit board (51).

Meanwhile, the ground path of the first filter circuit (60) is formed on the printed circuit board (51) without using a cable wire, thus enabling to achieve simplification of the filter circuit mounting unit (50). Here, since the radiation noise is relatively small in the ground path of the first filter circuit (60), it hardly propagates to the power supply line (55).

### <<Other embodiments>>

The above embodiment may be configured as follows.

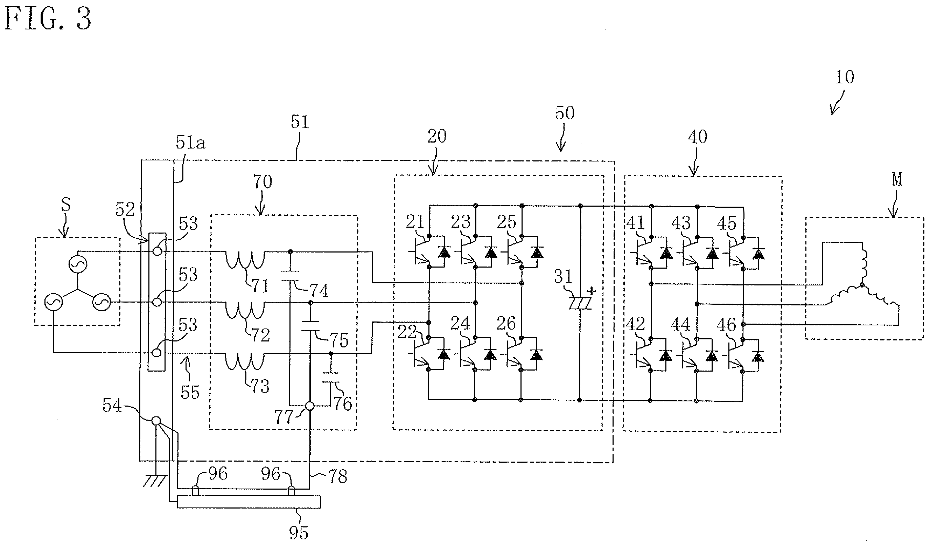

As for the filter circuit mounting unit (50) of the above embodiment shown in FIG. 1, the ground paths of both the first filter circuit (60) and the second filter circuit (70) may be composed of the ground wire (78) similar to the one used in the above embodiment. In this case, in the ground paths of the both filter circuits (60, 70), radiation noise can be reliably prevented from propagating to the power supply line (55). In addition, for example, as shown in FIG. 3, only one filter circuit (70) is provided on the power supply line (55), and the ground path of this filter circuit (70) is formed of the ground wire (78) of the above embodiment.

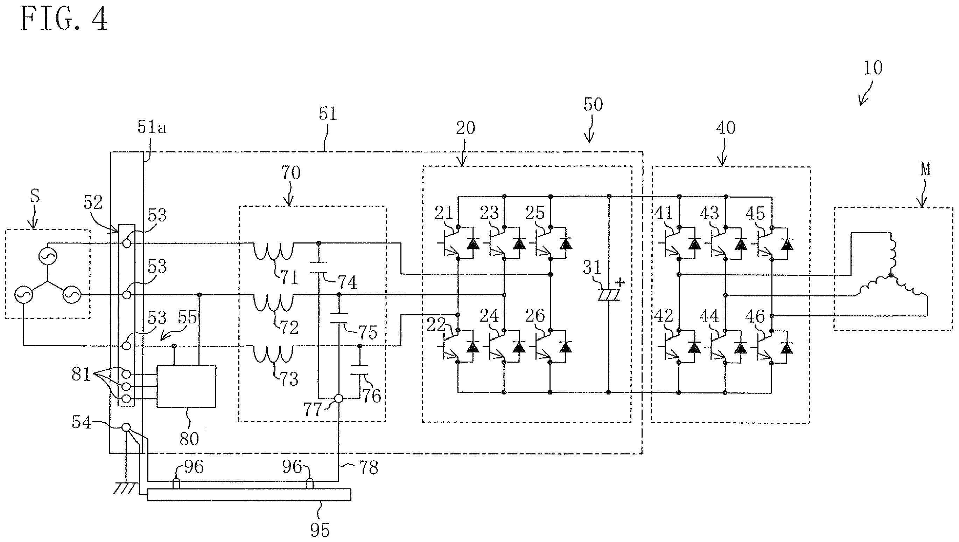

In addition, as shown in FIG. 4, a communication circuit (80) can also be provided in the filter circuit mounting unit (50). The communication circuit (80) is electrically connected to an indoor unit (not shown) of the air conditioner through relay terminals (81, 81, 81) of the terminal unit (52), while electric power being supplied from the power supply line (55) in a single-phase two-wire system. As a result, the communication circuit (80) and the indoor unit can communicate with each other. In addition, electric power is supplied to the indoor unit via the communication circuit (80) and the relay terminals (81, 81, 81).

Also in an example shown in FIG. 4, the ground path of the filter circuit (70) is composed of the ground wire (78). Here, as well as being arranged spaced apart from the power supply line (55) of the printed circuit board (51), the ground wire (78) is also arranged spaced apart from a communication line between the communication circuit (80) and the relay terminals (81). As a result, radiation noise from the ground wire (78) can also be prevented from propagating to the communication line, thus enabling to improve reliability of the air conditioner.

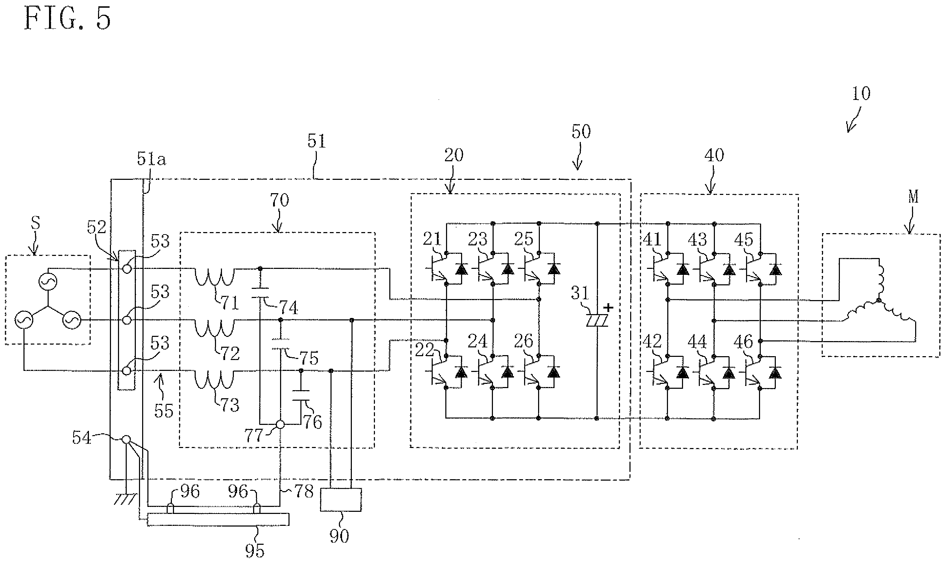

In addition, as shown in FIG. 5, a switching power supply (90) for a control circuit can also be provided at the power supply line (55). The switching power supply (90) for the control circuit is connected between the filter circuit (70) and the rectifier circuit (20). The switching power supply (90) for the control circuit constitutes a power supply for a control circuit having a weak electric current flowed therein.

In an example shown in FIG. 5, since switching operations are performed arbitrarily by the switching power supply (90) for the control circuit, larger amount of switching noise is generated compared with the above embodiment. However, also in this example, the ground path of the filter circuit (70) is formed of the ground wire (78) to be spaced apart from the printed circuit board (51), and thereby an effect of the radiation noise propagating to the power supply line (55) can be suppressed to the minimum. In addition, as for the each embodiment described above, it is not always necessary to configure the rectifier circuit (20) as the switching circuit, and, for example, it may be configured as a diode bridge circuit. In this case as well, the ground path of the filter circuit (70) is formed of the ground wire (78) to be spaced apart from the printed circuit board (51), and thereby an effect of the radiation noise propagating to the power supply line (55) can be suppressed to the minimum.

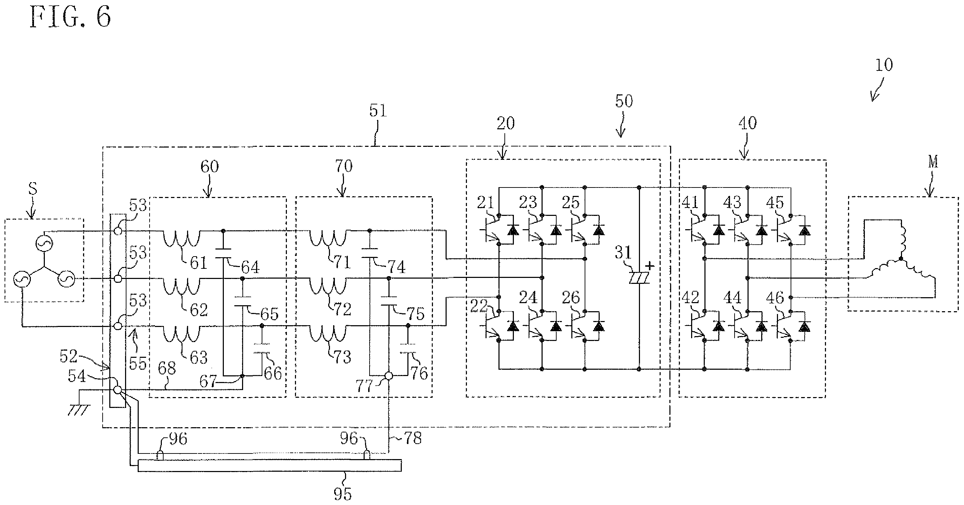

Further, as shown in FIG. 6, the ground terminal (54) may be provided in the terminal unit (52). In this case as well, the ground path of the filter circuit (70) is formed of the ground wire (78) to be spaced apart from the printed circuit board (51), and thereby an effect of the radiation noise propagating to the power supply line (55) can be suppressed to the minimum.

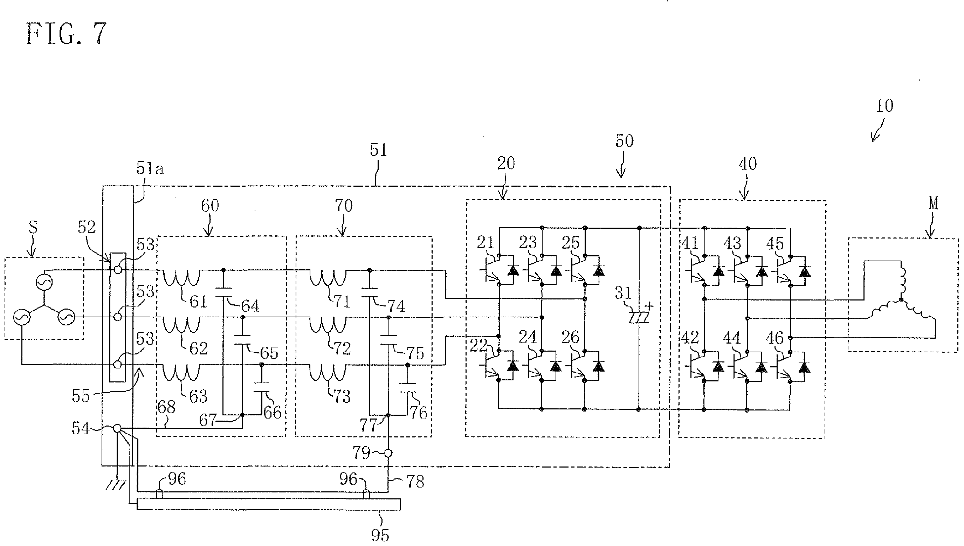

In addition, as shown in FIG. 7, an intermediate terminal (79) is provided on the printed circuit board (51), and a ground path between the intermediate terminal (79) and the ground terminal (54) may be composed of the ground wire (78). Specifically, in an example shown in FIG. 7, the intermediate terminal (79) is provided near a side end of the printed circuit board (51). The intermediate terminal (79) is connected to the connection (77) of the three Y capacitors (71, 72, 73) of the second filter circuit (70) through the wiring pattern on the printed circuit board (51). The intermediate terminal (79) and the ground terminal (54) are then connected to each other by the ground wire (78). Also in this example, the ground path from the intermediate terminal (79) to the ground terminal (54) is formed of the ground wire (78) to be spaced apart from the printed circuit board (51), and thereby an effect of the radiation noise propagating to the power supply line (55) can be suppressed to the minimum

In addition, in the above embodiments, although the filter circuit mounting unit (50) according to the present invention is applied to the power supply unit (10) for the motor (M) of the compressor of the air conditioner, for example, the filter circuit mounting unit (50) according to the present invention may be applied to a power supply unit (10) for the motor (M) of an indoor fan and an outdoor fan of the air conditioner, or it may be applied to the power supply unit (10) for other applications.

Note that the above embodiments are essentially preferred examples, and they are not intended to limit the scope of the present invention, as defined by the appended claims.

### INDUSTRIAL APPLICABILITY

As described above, the present invention is useful for filter circuit mounting units having filter circuits for reducing switching noise mounted on boards thereof.

## Claims

1. A filter circuit mounting unit (50) for use in a power supply unit (10) for a motor (M), comprising:
a printed circuit board (51) ;
an input terminal (53) provided at one end of the printed circuit board (51), said input terminal being connectable to a power supply (S);
a ground terminal (54) arranged at the one end of the printed circuit board (51) so as to be adjacent to the input terminal (53), and being connectable to a ground;
a switching circuit (20, 40) provided on the printed circuit board (51), and including a plurality of switching elements (21-26); and
at least one filter circuit (60, 70) connected between the input terminal (53) and the switching circuit (20, 40) on the printed circuit board (51) to reduce switching noise of the switching circuit (20, 40), wherein
a ground path that electrically connects the filter circuit (60, 70) and the ground terminal (54) is made of a cable wire (78) that is arranged so as to be spaced apart from the printed circuit board (51).

2. The filter circuit mounting unit of claim 1, wherein
a plurality of the filter circuits (60, 70) are connected to the power supply line (55) in multiple stages, and
at least one ground path of the plurality of filter circuits (60, 70) is made of the cable wire (78).

3. The filter circuit mounting unit of claim 2, wherein
a ground path of the filter circuit (60, 70) that is connected to a switching circuits (20, 40) side among the plurality of filter circuits (60, 70) includes the cable wire (78), and
a ground path of the filter circuit (60, 70) that is connected to an input terminals (53) side among the plurality of filter circuits (60, 70) includes a wiring pattern (68) on the board (51).

4. The filter circuit mounting unit of any one of claims 1-3, wherein a sheet metal (51a) on which the input terminal (53) and the ground terminal (54) are mounted is provided at the one end of the printed circuit board (51).

5. The filter circuit mounting unit of any one of claims 1-4, wherein the switching circuit(s) is/are composed of either one of or both of an inverter circuit (40) that converts a DC (direct current) voltage into an AC (alternating current) voltage, and a rectifier circuit (20) for rectifying an AC voltage of an AC power supply (S) into a DC voltage.

6. A power supply unit for a motor (M) of a compressor or a fan of a refrigeration system that performs a refrigeration cycle, the power supply unit comprising the filter circuit mounting unit (50) of any one of claims 1-5.

## Patentansprüche

1. Siebschaltungsmontageeinheit (50) zur Verwendung in einer Stromversorgungseinheit (10) für einen Motor (M), umfassend:
eine Leiterplatte (51);
einen Eingangsanschluss (53), der an einem Ende der Leiterplatte (51) vorgesehen ist, wobei der Eingangsanschluss mit einer Stromversorgung (S) verbindbar ist;
einen Masseanschluss (54), der an dem einen Ende der Leiterplatte (51) so angeordnet ist, dass er zu dem Eingangsanschluss (53) benachbart ist, und mit einer Masse verbindbar ist;
einen Schaltkreis (20, 40), der auf der Leiterplatte (51) vorgesehen ist und eine Mehrzahl von Schaltelementen (21-26) aufweist; und
zumindest eine Siebschaltung (60, 70), die zwischen dem Eingangsanschluss (53) und dem Schaltkreis (20, 40) auf der Leiterplatte (51) verbunden ist, um Schaltrauschen des Schaltkreises (20, 40) zu verringern, wobei
ein Massepfad, der die Siebschaltung (60, 70) und den Masseanschluss (54) elektrisch verbindet, aus einem Kabeldraht (78) gefertigt ist, der so angeordnet ist, dass er von der Leiterplatte (51) beabstandet ist.

2. Siebschaltungsmontageeinheit nach Anspruch 1, wobei
eine Mehrzahl der Siebschaltungen (60, 70) in mehreren Stufen mit der Stromversorgungsleitung (55) verbunden sind, und
zumindest ein Massepfad der Mehrzahl von Siebschaltungen (60, 70) aus dem Kabeldraht (78) gefertigt ist.

3. Siebschaltungsmontageeinheit nach Anspruch 2, wobei
ein Massepfad der Siebschaltung (60, 70), der mit einer Schaltkreis- (20, 40) Seite unter der Mehrzahl von Siebschaltungen (60, 70) verbunden ist, den Kabeldraht (78) aufweist, und
ein Massepfad der Siebschaltung (60, 70), der mit einer Eingangsanschluss- (53) Seite unter der Mehrzahl von Siebschaltungen (60, 70) verbunden ist, ein Verdrahtungsmuster (68) auf der Platte (51) aufweist.

4. Siebschaltungsmontageeinheit nach einem der Ansprüche 1 bis 3, wobei ein Blech (51a), auf dem der Eingangsanschluss (53) und der Masseanschluss (54) montiert sind, an dem einen Ende der Leiterplatte (51) vorgesehen ist.

5. Siebschaltungsmontageeinheit nach einem der Ansprüche 1 bis 4, wobei der (die) Schaltkreis(e) aus entweder einem aus oder beiden aus einer Inverterschaltung (40), die eine DC- (Gleichstrom-) Spannung in eine AC- (Wechselstrom-) Spannung umwandelt, und einer Gleichrichterschaltung (20) zum Gleichrichten einer AC-Spannung einer AC-Stromversorgung (S) in eine DC-Spannung, zusammengesetzt ist/sind.

6. Stromversorgungseinheit für einen Motor (M) eines Kompressors oder einen Lüfter eines Kühlsystems, das einen Kühlzyklus durchführt, wobei die Stromersorgungseinheit die Siebschaltungsmontageeinheit (50) nach einem der Ansprüche 1 bis 5 umfasst.

## Revendications

1. Unité de montage de circuit de filtrage (50) pour une unité d'alimentation en énergie (10) d'un moteur (M), comprenant :
une carte de circuit imprimé (51) ;
une borne d'entrée (53) ménagée à une première extrémité de la carte de circuit imprimé (51), ladite borne d'entrée étant raccordable à une alimentation en énergie (S) ;
une borne de terre (54) ménagée à la première extrémité de la carte de circuit imprimé (51) de manière à être adjacente à la borne d'entrée (53), et pouvant être connectée à une terre;
un circuit de commutation (20, 40) ménagé sur la carte de circuit imprimé (51), et comprenant une pluralité d'éléments de commutation (21-26) ; et
au moins un circuit de filtrage (60, 70) connecté entre la borne d'entrée (53) et le circuit de commutation (20, 40) sur la carte de circuit imprimé (51) pour réduire le bruit de commutation du circuit de commutation (20, 40), dans lequel
un chemin de terre qui relie électriquement le circuit de filtrage (60, 70) et la borne de masse (54) est constitué d'un fil de câble (78) qui est agencé de manière à être espacé de la carte de circuit imprimé (51).

2. Unité de montage de circuit de filtrage selon la revendication 1, dans laquelle
une pluralité des circuits de filtrage (60, 70) sont connectés à la ligne d'alimentation en énergie (55) en étages multiples, et
au moins un chemin de terre de la pluralité de circuits de filtrage (60, 70) est constitué du fil de câble (78).

3. Unité de montage de circuit de filtrage selon la revendication 2, dans laquelle
un chemin de terre du circuit de filtrage (60, 70) qui est connecté à un côté de circuits de commutation (20, 40) parmi la pluralité de circuits de filtrage (60, 70) comprend le fil de câble (78), et
un chemin de terre du circuit de filtrage (60, 70) qui est connecté à un côté de bornes d'entrée (53) parmi la pluralité de circuits de filtrage (60, 70) comprend un schéma de câblage (68) sur la carte (51).

4. Unité de montage de circuit de filtrage selon l'une quelconque des revendications 1 à 3, dans laquelle une feuille de métal (51a) sur laquelle est montée la borne d'entrée (53) et la borne de terre (54) sont ménagées à la première extrémité de la carte de circuit imprimé (51).

5. Unité de montage de circuit de filtrage selon l'une quelconque des revendications 1 à 4, dans laquelle le(s) circuit(s) de commutation est/sont composé(s) de l'un d'un circuit inverseur (40) qui converti une tension de courant continu en une tension de courant alternatif et d'un circuit redresseur (20) redressant une tension alternative d'une alimentation en courant alternatif (S) en une tension continue, ou des deux.

6. Unité d'alimentation en énergie pour un moteur (M) d'un compresseur ou d'un ventilateur d'un système de réfrigération qui effectue un cycle de réfrigération, l'unité d'alimentation en énergie comprenant l'unité de montage de circuit de filtrage (50) selon l'une quelconque des revendications 1 à 5.
